(19) Europäisches Patentamt / European Patent Office / Office européen des brevets

(11) **EP 4 577 749 B1**

(12) **EUROPÄISCHE PATENTSCHRIFT**

(45) Veröffentlichungstag und Bekanntmachung des Hinweises auf die Patenterteilung:
**27.05.2026 Patentblatt 2026/22**

(21) Anmeldenummer: **23765175.7**

(22) Anmeldetag: **23.08.2023**

(51) Internationale Patentklassifikation (IPC):
*F16B 25/00* *(2006.01)*

(52) Gemeinsame Patentklassifikation (CPC):
**F16B 25/0052;** F16B 25/0021; F16B 25/0047

(86) Internationale Anmeldenummer:
**PCT/EP2023/073184**

(87) Internationale Veröffentlichungsnummer:
**WO 2024/042142 (29.02.2024 Gazette 2024/09)**

(54) **SCHRAUBE FÜR DIE DIREKTVERSCHRAUBUNG IN EIN BAUTEIL**

SCREW FOR DIRECT SCREWING INTO A COMPONENT

VIS POUR VISSAGE DIRECT DANS UN COMPOSANT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **24.08.2022 DE 102022121434**

(43) Veröffentlichungstag der Anmeldung:
**02.07.2025 Patentblatt 2025/27**

(73) Patentinhaber: **EJOT SE & Co. KG**
**57319 Bad Berleburg (DE)**

(72) Erfinder:
• **ACHENBACH, Michael**
**35236 Breidenbach (DE)**
• **BIRKELBACH, Ralf**
**57334 Bad Laasphe (DE)**
• **GERBER, René**
**35112 Fronhausen (DE)**
• **HACKLER, Jan**
**57319 Bad Berleburg (DE)**
• **HELLMIG, Ralph J.**
**57334 Bad Laasphe (DE)**
• **RUNKEL, Dirk**
**57334 Bad Laasphe (DE)**
• **SCHLOSSER, Frank**
**35041 Marburg (DE)**
• **SELIMI, Ilir**
**57072 Siegen (DE)**
• **SINNER, Christoph**
**57334 Bad Laasphe (DE)**
• **WEIGEL, Gerd**
**35713 Eschenburg (DE)**

(74) Vertreter: **patcare Patentanwälte Partnerschaft mbB**
**Bajuwarenring 21**
**82041 Oberhaching (DE)**

(56) Entgegenhaltungen:
DE-A1- 102010 031 410     DE-A1- 4 206 440
FR-A- 1 337 952

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Schraube zur Direktverschraubung in ein Bauteil, insbesondere einem Bauteil aus einem Leichtmetallwerkstoff.

Die EP 1 053 405 B1 offenbart eine selbstfurchende Schraube mit einem Halteabschnitt und einem Eindringabschnitt, mit dem das Schraubengewinde den Mutterwerkstoff zur Formung eines Gewindes verdrängt. Das dem Schraubenkopf zugewandte Ende des Eindringabschnitts bildet einen Kalibrierabschnitt, der nur geringfügig in das Mutterteil eindringt und das geformte Gewinde kalibrieren soll. Das geringste Niveau zwischen den Kalibriererhebungen liegt in diesem Bereich auf demselben Gewinderadius, wie er im zylindrischen Tragbereich vorliegt. Die Kalibriererhebungen bilden zwei gegenüberliegende Stützpunkte, die den gleichen Abstand von der Schraubenmittelachse besitzen. Es soll sich nur ein geringer Überstand über den Tragdurchmesser ergeben.

Eine ähnliche Gestaltung ist in der WO 95/14863 A1 offenbart, die eine gewindefurchende Schraube mit Formelementen, die auf den Gewindegang aufgesetzt sind, lehrt. Diese Schraube soll das grundsätzlich bei der Gewindeformung im Mutterwerkstoff mit zunehmender Einschraubtiefe zunehmende Einschraubmoment reduzieren. Das Dokument FR 1 337 952 A zeigt eine weitere Schraube aus dem Stand der Technik.

Die Schraube weist im vorderen Bereich Formbereiche auf, die sich über ein im Wesentlichen von dem Schaft bis in die Spitze durchlaufendes Basisgewinde radial hinaus erstrecken und die in Umfangsrichtung begrenzt und relativ kurz sind. Die vorgenannte Schraube offenbart eine Kalibriererhebung im Tragbereich, die nur sehr wenig über das Traggewinde hinausragt, insbesondere weniger als 0,08 mm.

Durch die vorgenannten Schrauben wird die Reibung beim Furchvorgang reduziert und dennoch eine gute Befestigungsleistung erreicht. Eine zuverlässige Herstellung solcher Kalibriererhebungen, insbesondere mittels eines Walzverfahrens, ist schwierig, da das Material, das zur Ausformung der Kalibriererhebung benötigt wird, im Walzprozess nicht ausreichend zur Verfügung gestellt wird. So kann eine definierte Ausformung der Kalibrierhebung nicht zuverlässig sichergestellt werden.

Es ist Aufgabe der Erfindung, die Befestigungsleistung der Schraube unter Beibehaltung eines geringen Furchmoments weiter zu verbessern und die Herstellbarkeit zu erleichtern.

Die Aufgabe wird durch die kennzeichnenden Merkmale des Anspruchs 1 in Verbindung mit seinen Oberbegriffsmerkmalen gelöst.

In bekannter Weise umfasst eine Schraube zur Direktverschraubung in ein Bauteil, insbesondere in ein Bauteil aus einem Leichtmetallwerkstoff, einen Kopf mit einem Antrieb und einen Schaft, wobei der Schaft mit einem Gewinde versehen ist. Der Gewindeaußenradius des Gewindes verringert sich ausgehend von einem zylindrischen Tragbereich über einen Spitzenbereich zur Schraubenspitze hin derart, dass das Gewinde am vom Kopf beabstandeten Ende einen geringeren Gewindeaußenradius aufweist als im Tragbereich. Der Spitzenbereich beginnt an der dem Tragbereich nächstgelegenen Position der Schraube, an der der Gewindeaußenradius geringer als der Tragebereichsradius ist und erstreckt sich bis zu der Schraubenspitze.

Durch das Gewinde im Spitzenbereich wird ein Muttergewinde im Mutterwerkstoff des Bauteils erzeugt, in welches das Gewinde im Tragbereich eingeschraubt wird.

Das Gewinde weist im Spitzenbereich wenigstens fünf sich in Radialrichtung erstreckende Erhebungen auf. Die Erhebungen sind in Umfangsrichtung begrenzt. Dies bedeutet, dass zwischen den Erhebungen ein lokales Minimum liegt.

Der Gewindeaußenradius folgt entlang der Schraubenlinie bereichsweise einem Basisgewindeverlauf. Der Basisgewindeverlauf wird über die lokalen Minima, die zwischen den Erhebungen liegen, über den Spitzenbereich interpoliert. Das Gewinde wird in dem Bereich, in dem es mit dem interpolierten Basisgewindeverlauf übereinstimmt, als Basisgewinde bezeichnet, das einen ausgehend von der Schraubenspitze bis zum Tragbereichsradius ansteigenden Basisgewindeaußenradius aufweist.

Das Basisgewinde verläuft sozusagen so, wie das Gewinde ohne Erhebungen verlaufen würde. Der Basisgewindeaußenradius nimmt bevorzugt über den Spitzenbereich streng monoton, insbesondere linear, ab und entspricht im Tragbereich dem Tragbereichsradius.

Der Basisgewindeaußenradius im Tragbereich ergibt sich aufgrund des Hüllaußendurchmessers der zylindrischen Hüllkurve im Tragbereich. Der Tragbereichsradius ist über den gesamten Bereich, mit dem das Gewinde des Tragbereichs in das durch die Erhebungen im Spitzenbereich vorgefurchte Gewinde eingreift, konstant. Auf diese Weise sind erfindungsgemäß im zylindrischen Teil des Außengewindes keine Erhebungen mehr vorgesehen, da diese aufgrund ihrer unzuverlässigen Herstellbarkeit in diesem Bereich das Einschraubverhalten negativ beeinflussen können.

Im Spitzenbereich weist das Gewinde im Bereich der Erhebungen einen sich gegenüber dem Basisgewindeaußenradius ändernden Gewindeaußenradius auf, der entsprechend gegenüber dem Basisgewindeaußenradius vergrößert ist. Jede Erhebung weist so in Umfangsrichtung entlang der Schraubenlinie einen maximalen Gewindeaußenradius auf, der einem einer Erhebung zugeordneten Erhebungsmaximalradius entspricht. Dies sorgt für einen Anstieg und Abfall des Gewindeaußenradius über die Erhebung entlang der Schraubenlinie.

Erfindungsgemäß sind wenigstens zwei Erhebungen als Kalibriererhebungen ausgebildet, bei welchen der Erhebungsmaximalradius der Kalibriererhebungen gleich groß ist und gleichzeitig auch größer als der Tragbereichsradius ist. Der Erhebungsmaximalradius der Kalibriererhebungen definiert den Kalibrierradius.

Durch die wenigstens zwei Kalibriererhebungen wird ermöglicht, dass zunächst nur die der Schraubenspitze nächstliegende Kalibriererhebung eine Furchleistung erbringt. Die wenigstens eine, weiter beabstandete, Kalibriererhebung erbringt so lange keine oder nur eine deutlich reduzierte Furchleistung, bis die näher in Richtung der Schraubenspitze liegende Kalibriererhebung abgenutzt ist. Die in Richtung des Tragbereichs nachfolgende Kalibriererhebung übernimmt dann die Furchfunktion in dem Maß der Abnutzung der näher in Richtung der Schraubenspitze liegenden Kalibriererhebung. So wird ermöglicht, dass auch über einen längeren Einschraubweg und damit einhergehender größerer Furchleistung das Traggewinde in einen im Bauteil vorgeformten Gewindegang eingreifen kann, der möglichst definiert vorgeformt ist. Dies hat ein reduziertes Einschraubmoment zur Folge.

Zudem wird durch die erfindungsgemäße Schraube das Einschraubmoment gering und in engen Grenzen gehalten, da von den Kalibriererhebungen nur dann eine zusätzliche Furchleistung erbracht wird, wenn die näher an der Schraubenspitze liegenden Kalibriererhebungen abgenutzt sind.

Dadurch, dass die Kalibriererhebungen im Bereich des abnehmenden Basisgewindeaußenradius liegen, ergibt sich eine größere Differenz zum Basisgewindeaußenradius als zum Tragbereichsradius. Auch bei einem sehr geringen Unterschied zwischen Kalibrierradius, dem Erhebungsmaximalradius der Kalibriererhebungen, und dem Tragbereichsradius, können so die Kalibriererhebungen zuverlässiger hergestellt werden, da auf diese Weise das Material für die Ausformungen der Kalibriererhebungen zur Verfügung gestellt wird. Dieser Unterschied zwischen dem Erhebungsmaximalradius der Kalibriererhebungen, also dem Kalibrierradius, und dem Tragbereichsradius ist bevorzugt sehr gering und liegt insbesondere bei weniger als 0,1 mm.

Bevorzugt können wenigstens drei Kalibriererhebungen mit gleichem Erhebungsmaximalradius vorgesehen sein. So gibt es eine der Schraubenspitze nächstliegende Kalibriererhebung, die noch eine geringe Furchleistung erbringt und zwei weitere Kalibriererhebungen, die weiter von der Schraubenspitze entfernt angeordnet sind. Nach Abnutzung der jeweils der Schraubenspitze nächstliegenden Kalibriererhebungen kann durch die weiter beabstandeten Kalibriererhebungen eine präzise Ausformung des Gewindegangs im Bauteil ermöglicht werden. Diese Gestaltung wird umso vorteilhafter, je härter der Bauteilwerkstoff und damit der Mutterwerkstoff ist.

Zudem sind zwischen den Kalibriererhebungen und der vordersten Schraubenspitze wenigstens drei Vorformerhebungen angeordnet, deren jeweiliger Erhebungsmaximalradius kleiner sind als der Erhebungsmaximalradius der Kalibriererhebungen, dem Kalibrierradius. Zudem nimmt der Erhebungsmaximalradius der jeweiligen Vorformerhebungen in Richtung der Schraubenspitze ab. Dadurch kann der Mutterwerkstoff fortschreitend ausgeformt werden. Die Differenz im Erhebungsmaximalradius von aufeinanderfolgenden Erhebungen ist dabei bevorzugt so gewählt, dass jede Vorformerhebung in etwa dieselbe Furchleistung erbringen muss.

Gemäß einer bevorzugten Ausgestaltung nimmt der Basisgewindeaußenradius ausgehend von der Schraubenspitze über den Spitzenbereich in gleicher Weise zu, wie die Erhebungsmaximalradien der Vorformerhebungen zunehmen. Der interpolierte Verlauf des Erhebungsmaximalradius ist insbesondere parallel zum interpolierten Verlauf der lokalen Minima.

Bevorzugt liegt zwischen dem Tragbereichsradius und dem ersten Erhebungsmaximalradius in Richtung der Schraubenspitze ein lokales Minimum im Gewindeaußenradius vor, an dem der Gewindeaußenradius geringer als der Tragbereichsradius ist. Dies bedeutet, dass die Erhebung auch in Richtung des Kopfes vor dem Tragbereich auf das Niveau des Basisgewindes abfällt, das dort im Gewindeaußendurchmesser geringer als der Tragbereichsradius ist. Dadurch liegt die erste Erhebung ausgehend vom Tragbereich in Richtung der Schraubenspitze vollständig im Spitzenbereich.

Das Verhältnis von Gewindeaußenradius an diesem ersten lokalen Minimum zum Tragbereichsradius ist bevorzugt kleiner als 0,996. Dadurch wird eine ausreichend großer Unterschied im Außengewinderadius erreicht, so dass ausreichend Material zur Ausformung der Erhebung zur Verfügung steht.

Gemäß einer weiteren vorteilhaften Ausgestaltung ist das Gewinde derart gestaltet, dass ein Verhältnis des prozentualen Überstands von Kalibrierradius zu einem Minimums-Mittelwert zum prozentualen Überstand des Kalibrierradius zum Tragbereichsradius größer als 1,4 ist.

Der Minimums-Mittelwert ist der Mittelwert des Gewindeaußenradius am ersten lokalen Minimum und des Gewindeaußenradius am zweiten lokalen Minimum. Das erste lokale Minimum liegt zwischen dem Tragbereich und der ersten, in Richtung der Spitze dem Tragbereich nächstliegenden Erhebung, das zweite lokale Minimum liegt zwischen dieser ersten Erhebung und der in Richtung der Spitze nächstliegenden Erhebung.

Alternativ zu einer linearen Zunahme des Erhebungsmaximalradiusverlaufs kann der Verlauf der Zunahme der Erhebungsmaximalradien in Richtung des Kopfes auch degressiv sein. Dadurch kann eine Anpassung an das Furchverhalten und an die Härte des Bauteilwerkstoffs erfolgen.

Die lokalen Minima zwischen den Erhebungen können dem Basisgewindeaußenradius entsprechen und über einen sich wenigstens teilweise über den Spitzenbereich erstreckenden Furchbereich kontinuierlich, insbesondere linear, in Richtung der Schraubenspitze abnehmen.

Entsprechen die lokalen Minima des Gewindeaußenradius zwischen den Erhebungen dem Basisgewindeaußenradius, führt dies zu einer vereinfachten Herstellung der Schraube und zu verbesserten Auszugskräften, da auch die Gewinde im gewindeformenden Spitzenbereich schon zur Auszugsfestigkeit beitragen können.

Das Gewinde ist in Radialrichtung durch eine Gewindespitze begrenzt. Wie üblich, erstreckt sich das Gewinde mit seiner Gewindespitze entlang der Gewindehelix, wobei die Lage der Punkte an der Gewindespitze, an welchen der Gewindeaußenradius bestimmt wird, sich in der Normalen-Ebene (Grundriss) in ihrem Winkel verändert, dieser Winkel wird als Umlaufwinkel bezeichnet.

Der Umlaufwinkel ist also der Winkel, den der Gewindeaußenradius, der eine Orthogonale zur Schraubenachse auf die Gewindehelix darstellt, mit einer am freien Schraubenende definierten Start-Orthogonalen, insbesondere am Gewindebeginn, einschließt. Ausgehend von der Start-Orthogonalen am Beginn des Gewindes erhöht sich der Umlaufwinkel mit jeder vollen Umdrehung um 360°.

Gemäß einer bevorzugten Ausgestaltung einer Erhebung kann an einer ersten Umlaufwinkelposition des Erhebungsumlaufwinkels der Gewindeaußenradius dem Basisgewindeaußenradius entsprechen. Bei zunehmender Erhöhung des Umlaufwinkel entspricht der Gewindeaußenradius dann in einer Umlaufwinkelposition am Maximum der Erhebung dem Erhebungsmaximalradius. Bei weiter zunehmendem Umlaufwinkel, an einer Umlaufwinkelposition am Ende der Erhebung, entspricht der Gewindeaußenradius dem Basisgewindeaußenradius. Dadurch ergibt sich ein Anstieg und Abfall des Gewindeaußenradius auf den Basisgewindeaußenradius. So kann eine verbesserte Tragfähigkeit schon in dem Bereich hergestellt werden, in dem der Basisgewindeaußenradius noch zunimmt.

Gemäß einer bevorzugten Weiterbildung einer Erhebung nimmt der Gewindeaußenradius ausgehend vom Basisgewindeaußenradius über einen Erhebungsumlaufwinkel monoton zu und dann bis zum Basisgewindeaußenradius monoton wieder ab. Dies erlaubt eine einfache Herstellung und definierte Furcheigenschaften der Erhebung. Insbesondere verläuft die Zu- und Abnahme entlang einer Parabel, deren Scheitelpunkt am Erhebungsmaximalradius liegt.

Der Basisgewindeaußenradius nimmt bevorzugt zwischen zwei entlang der Schraubenlinie parabolisch verlaufenden Erhebungen in Richtung des Kopfes linear zu.

Gemäß einer weiteren vorteilhaften Weiterbildung der Erfindung ist der Erhebungsmaximalradius einer Vorformerhebung größer als der nächstgelegene Gewindeaußenradius am Beginn der in Richtung des Schraubenkopfes nächstgelegenen Erhebung. Am Beginn einer Erhebung kann der Verlauf der Zunahme des Gewindeaußenradius eine größere Steigung aufweisen als der Verlauf des Basisgewindes. Durch diese Anordnung der Erhebungen wird sichergestellt, dass alle Vorformerhebungen nur über einen Teilbereich eine Furchleistung erbringen müssen, was das Furchmoment und die Abnutzung der Erhebungen reduziert.

Gemäß einer weiteren vorteilhaften Weiterbildung der Erfindung entspricht der Erhebungsumlaufwinkel, in der Normalen-Ebene zur Schraubenmittelachse, zwischen zwei benachbarten Erhebungsmaximalradien einem Winkelabstand alpha, mit $360°/n - 10° < alpha < 360°/n + 10°$, wobei n zwischen 2, 3 oder 4, und der Winkelabstand einer Erhebung kleiner als $210°/n$ ist. Dadurch wird eine über den Erhebungsumlaufwinkel relativ kurze Erhebung definiert, was die Reibung im Bereich des Erhebungsmaximalradius reduziert. Dadurch kann das Einschraubmoment reduziert werden.

Die Erhebungen können sich nicht nur in Richtung des Außenradius nach außen erstrecken, sondern auch eine Ausdehnung in Längsrichtung der Schraube aufweisen, die größer als eine Ausdehnung des Basisgewindes in Längsrichtung der Schraube ist. Dies kann insbesondere beidseitig der Fall sein.

Dadurch kann das Muttergewinde durch die Vorformerhebungen bereits auch in seiner Breite fortschreitend vergrößert werden.

Insbesondere beträgt die Länge des Gewindes über den Spitzenbereich weniger als fünf Windungen. So kann, insbesondere bei einer Verschraubung in ein Sackloch, ein möglichst großer Teil der Schraubenlänge zur Tragfunktion beitragen.

Gemäß einer weiteren vorteilhaften Weiterbildung nimmt der Kerndurchmesser ausgehend von der Spitze über den Spitzenbereich zu, bis er dem Kerndurchmesser im Tragbereich entspricht. Auf diese Weise kann die Herstellbarkeit der erfindungsgemäßen Schraube verbessert werden.

Die relative Zunahme des Kerndurchmessers kann geringer als die Zunahme des Basisgewinderadius sein.

Die Steigung der Gewindelinie kann vorzugsweise etwa 5°-7° betragen, was der Zunahme des Basisgewindeaußenradius pro Windung um 3% bis 5% entspricht. Durch die sanfte Zunahme kann insbesondere bei proportionaler Zunahme des Erhebungsmaximalradius eine allmähliche Einformung des Muttergewindes in den Mutterwerkstoff erfolgen.

In einer weiteren vorteilhaften Weiterbildung ist die Gewindeflankenbreite in Axialrichtung schmal ausgestaltet. Das Gewinde weist eine der Schraubenspitze zugewandte Führungsflanke und eine dem Schraubenkopf zugewandte Lastflanke auf. Die Führungsflanke und die Lastflanke schließen einen Grundflankenwinkel ein. Der Grundflankenwinkel liegt bevorzugt zwischen 25° und 45°. Dies erlaubt ein verbessertes Einschraubverhalten, insbesondere in hochfeste Leichtmetallwerkstoffe.

Weiter bevorzugt sind die Erhebungen des Gewindes über die Schraubenspitze im Querschnitt so gestaltet, dass diese eine elliptische Form an der Gewindespitze aufweisen.

Gemäß einer besonders bevorzugten Ausgestaltung sind also im Bereich der Erhebung die Führungsflanke und die Lastflanke über eine Gewindespitze verbunden, deren Konturlinie im Querschnitt einer Ellipse folgt. Die Ellipse weist dabei eine numerische Exzentrizität Epsilon zwischen 0,5 und 1 auf.

Durch die elliptische Gestaltung der Gewindespitze im Bereich der Erhebung kann eine an der äußersten Gewindespitze robuste Formstruktur bereitgestellt werden, wodurch diese gute Furcheigenschaften besitzt. Zudem wird dem verdrängten Material im weiteren Verlauf von der äußersten Gewindespitze in Richtung des Gewindegrunds bis zur Flanke mit zunehmendem Abstand vom Scheitelpunkt immer weniger Widerstand entgegengebracht. Dadurch werden die zur Verformung des Mutterwerkstoffs notwendigen Radialkräfte reduziert, was ein leichteres Eindringen des Gewindes in den Mutterwerkstoff zur Folge hat. Dadurch wird auch die Abnutzung der Erhebungen reduziert, was insbesondere im Hinblick auf die Kalibriererhebungen bedeutet, dass eine definierte Ausformung des Gewindes im Mutterwerkstoff verbessert wird.

Zusätzlich zu der elliptischen Gestaltung der Gewindespitze der Erhebungen können auch die Gewindespitzen des Basisgewindes im Tragbereich eine elliptische Form aufweisen. Durch die Anpassung der Form des Basisgewindes im Tragbereich kann eine verbesserte Anlage des Basisgewindes an das gefurchte Muttergewinde erreicht werden. Gemäß einer besonders bevorzugten Weiterbildung ist das Gewinde so gestaltet, dass sich zwei Tangenten an der die Gewindespitze definierenden Ellipse, schneiden und einen Schnittwinkel, nämlich einen Grundflankenwinkel von weniger als 60°, insbesondere weniger als 45°, bilden.

Jede der beiden Tangenten liegt in einem Berührpunkt an der Ellipse, der am Übergang von dem, die Gewindespitze definierenden elliptischen Bereich zu der an die Gewindespitze anschließende Gewindeflanke liegt, nämlich eine Lastflanke und eine Führungsflanke, wobei jede Tangente einen Halbflankenwinkel mit der großen Halbachse einschließt.

Der Abstand der beiden Berührpunkte von der großen Halbachse ist jeweils größer als 1/3 * tan (Halbflankenwinkel) * Gewindehöhe. Die Gewindehöhe ist die Differenz von Basisgewindeaußenradius und halbem Kerndurchmesser. Mit dieser Gestaltung wird eine relativ schmale Ausbildung der Gewindeflanken erreicht.

Weiter bevorzugt kann die Gewindespitze im Bereich der Erhebung so weitergebildet sein, dass die Verbindungslinie von dem jeweiligen Berührpunkt mit dem Scheitelpunkt der großen Halbachse an der Gewindespitze einen Scheitelpunktswinkel mit der großen Halbachse einschließt, der kleiner als 55° ist. Dies sorgt für einen entsprechend schlanken Verlauf der Gewindespitze, so dass ein verbessertes Eindringverhalten in den Mutterwerkstoff erreicht werden kann.

So ergeben sich ein Berührpunkt an der Lastflanke und ein Berührpunkt an der Führungsflanke. Eine Orthogonale auf die jeweilige Tangente durch den Berührpunkt schneidet die große Halbachse in einem Schnittpunkt. Die Gewindespitze kann bevorzugt derart gestaltet sein, dass der Abstand zwischen dem Berührpunkt und dem Schnittpunkt kleiner ist als der Abstand des Schnittpunkts zum Scheitelpunkt der Gewindespitze. Bevorzugt entspricht der Abstand zwischen dem Berührpunkt und dem Schnittpunkt weniger als 90% des Abstands des Schnittpunkts zum Scheitelpunkt der Gewindespitze.

Gemäß einer besonders bevorzugten Ausgestaltung verläuft der Übergang von der elliptischen Gewindespitze in die Gewindeflanke tangential. Der Übergang erfolgt damit fließend und das von der Gewindespitze verdrängte Material kann reibungsarm weiter an der Gewindeflanke entlang fließen, wodurch das Furchmoment reduziert werden kann.

Bevorzugt kann die Ellipse in einen geradlinigen Abschnitt der Führungsflanke und / oder Lastflanke übergehen, wobei diese deckungsgleich mit der Tangente ist.

In einer Weiterbildung der Erfindung kann die Führungsflanke und / oder die Lastflanke entlang einer Ellipsenbahn verlaufen, deren Krümmung entgegen der Krümmung der Ellipse an der Gewindespitze ausgebildet ist. Die Krümmung kann dabei unmittelbar an die Gewindespitze oder an einen geradlinigen Abschnitt der Führungsflanke und / oder Lastflanke anschließen.

Die Exzentrizität der Ellipsenbahn der Führungsflanke und / oder Lastflanke ist bevorzugt geringer als die Exzentrizität der die Gewindespitze definierenden Ellipse. Dadurch ergibt sich eine deutliche Verbreiterung des Gewindes in Richtung des Gewindefußes, wodurch die Scherfestigkeit und Stabilität des Gewindes erhöht werden.

Gemäß einer weiteren vorteilhaften Weiterbildung der Erfindung ist die große Halbachse der die Gewindespitze definierenden Ellipse gegenüber der Normalebene zur Schraubenmittelachse um einen Winkel von bis zu 10° in Richtung der Führungs-Flanke geneigt.

Insbesondere beträgt der Abstand benachbarter Gewindeflanken bei 90 % ihrer Gewindehöhe mehr als das 0,7-fache der Steigung. Ferner kann die Flankenbreite bei 90 % ihrer Gewindehöhe weniger als das 0,5-fache der Gewindehöhe betragen. Auf diese Weise wird eine ausreichend kleine Gewindespitzenbreite bereitgestellt.

Die Schraube ist bevorzugt aus Stahl.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:

Fig. 1     eine Seitenansicht der Schraube im Tragbereich und Spitzenbereich;

Fig. 2a    eine perspektivische Ansicht;

Fig. 2b    eine Draufsicht auf die Spitze;

Fig. 3a    eine Darstellung der Gewindelinie und des (interpolierten) Kerndurchmessers;

Fig. 3b    eine ausschnittsweise vergrößerte Darstellung von Fig. 3a;

Fig. 4     eine ausschnittsweise Schnittdarstellung des Gewindes;

Fig. 5     einen Konturverlauf des Traggewindes in Querschnittsansicht, und

Fig. 6     einen Konturverlauf des Gewindes einer Kalibriererhebung in Querschnittsansicht.

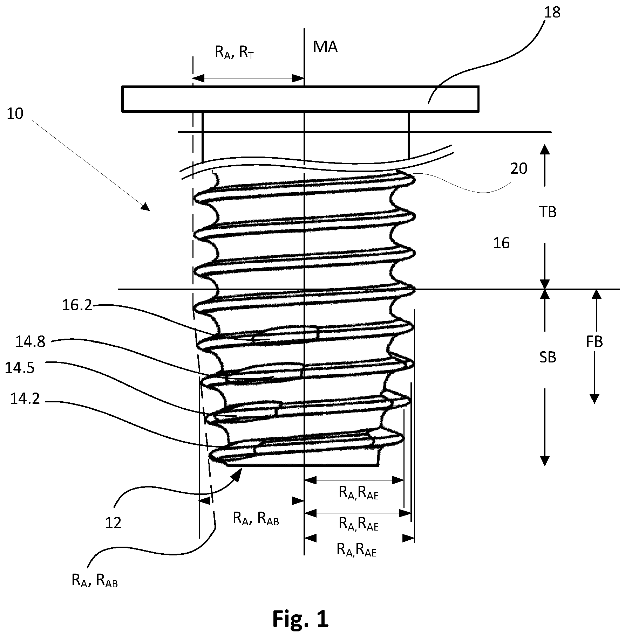

Fig. 1 zeigt eine Seitenansicht einer erfindungsgemäßen Schraube 10 zur Verschraubung in ein Bauteil aus einem Leichtmetallwerkstoff. Die Schraube 10 umfasst ein, als Schraubenspitze 12 bezeichnetes, vorderes Ende und einen am anderen Ende der Schraube 10 liegenden Kopf 18. Die Schraube besitzt ein Gewinde 20 mit einem Tragbereich TB, wobei im Tragbereich TB das Gewinde 20 einen konstanten Gewindeaußenradius $R_A$ über die Schraubenlinie besitzt, nämlich den Tragbereichsradius $R_T$, der dem halben Außendurchmesser im Tragbereich TB entspricht. Der Tragbereichsradius $R_T$ ergibt sich bevorzugt aufgrund des Nenn-Außendurchmessers der Schraube. So entspricht der Tragbereichsradius $R_T$ dem halben Nenn-Außendurchmessers. An den Tragbereich TB schließt sich in Richtung der Schraubenspitze 12 ein Spitzenbereich SB an, über den der Gewindeaußenradius $R_A$ des Gewindes 20 entlang der Schraubenlinie variiert und im Ergebnis bis zur Schraubenspitze 12 abnimmt. Im Spitzenbereich SB weist das Gewinde 20 in Umfangsrichtung abgegrenzte, sich in Radialrichtung erstreckende Erhebungen 14.2, 14.5, 14.8, 16.1, 16.2. (auch mit 14.X, 16.X bezeichnet) auf. Im Bereich dieser Erhebungen 14.X, 16.X verläuft das Gewinde 20 mit einem sich ändernden Gewindeaußenradius $R_A$. Ausgehend von der Schraubenspitze 12 nimmt der Gewindeaußenradius $R_A$ im Wesentlichen zu und bildet ein Gewinde 20, das im Wesentlichen ein Basisgewinde mit dem Basisgewindeaußenradius $R_{AB}$ aufweist, wobei der Basisgewindeaußenradius $R_{AB}$ linear ansteigt. Zudem weist das Gewinde Erhebungen 14.X, 16.X auf, deren Erhebungsaußenradius $R_{AE}$ gegenüber dem Basisgewindeaußenradius $R_{AB}$ vergrößert ist.

Von den bereichsweisen Erhebungen 14.X, 16.X im Spitzenbereich SB weisen wenigstens zwei Erhebungen 16.X einen Erhebungsmaximalradius $R_{E9max}$, $R_{E10max}$ auf, der für die beiden Erhebungen 16.1, 16.2 gleich groß ist und dem Kalibrierradius $R_K$ entspricht, der größer als der Tragbereichsradius $R_T$ ist. Diese Erhebungen werden als Kalibriererhebungen 16.X bezeichnet, da wenigstens die entlang der Schraubenlinie weiter in Richtung des Kopfes liegenden Kalibriererhebungen 16.X keine allzu großen Umformarbeiten zur Erzeugung des Muttergewindes mehr leisten müssen, sondern sicherstellen sollen, dass gegebenenfalls vorliegende Ungenauigkeiten des vorgeformten Gewindes, besonders im Bereich der Gewindespitze, reduziert werden. Insbesondere sollen solche Ungenauigkeiten reduziert werden, die durch Abnutzung der jeweils näher in Richtung der Schraubenspitze 12 liegenden Kalibriererhebung 16.X entstehen. Damit kann dann die Reibung des nachfolgend in die gefurchten Gewindegänge eingedrehten Gewindes 20 des Tragbereichs TB gering sein, so dass das Einschraubmoment gering und in engen Grenzen gehalten werden kann.

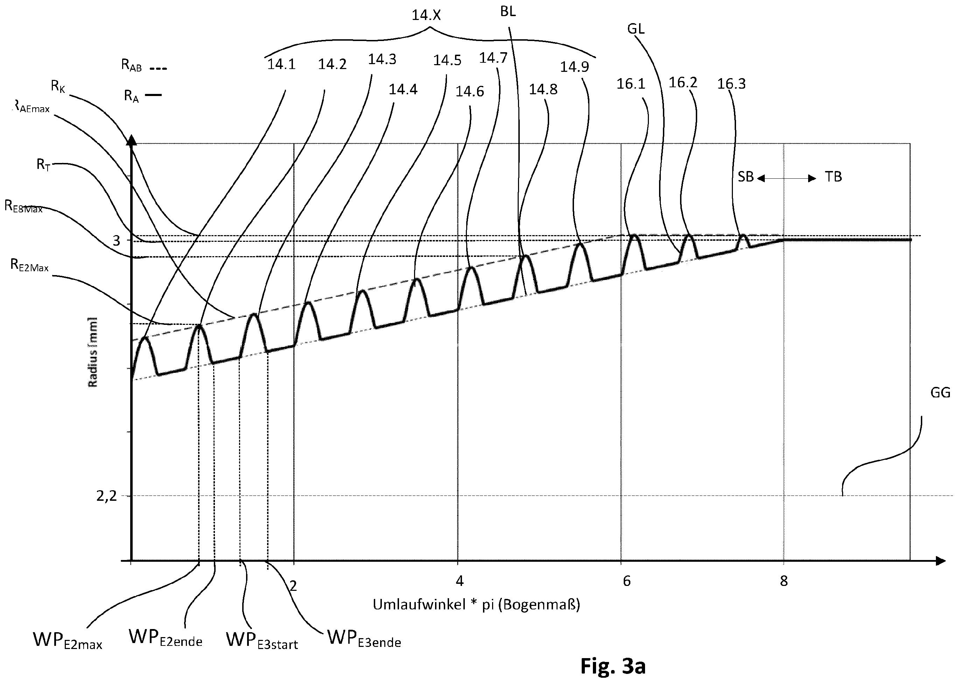

Zwischen den Kalibriererhebungen 16.X und der vordersten Spitze 12 sind zum Zwecke der Gewindeformung wenigstens drei Vorformerhebungen 14.X angeordnet, die in ihrem jeweiligen Erhebungsmaximalradius $R_{E1max}$,..., $R_{E8max}$, kleiner sind als der Kalibrierradius $R_K$. Im vorliegenden Ausführungsbeispiel sind 8 Vorformerhebungen 14.X vorgesehen. Durch die Zunahme der Erhebungsmaximalradius $R_{E1max}$, bis $R_{E8max}$ also des Gewindeaußenradius $R_A$ am lokalen Maximum der Erhebung 14.X, über den Spitzenbereich SB in Richtung des Tragbereichs TB wird das Muttergewinde mit zunehmender Tiefe in den Mutterwerkstoff geformt. Diese Zunahme des Erhebungsmaximalradius $R_{E1max}$ ist insbesondere in der Darstellung gemäß Fig. 3a, in der der Verlauf der Zunahme des jeweiligen Erhebungsmaximalradius $R_{E1max}$, bis $R_{E8max}$, der mit dem interpolierten Verlauf $R_{AEMax}$ bezeichnet ist, gut zu erkennen ist.

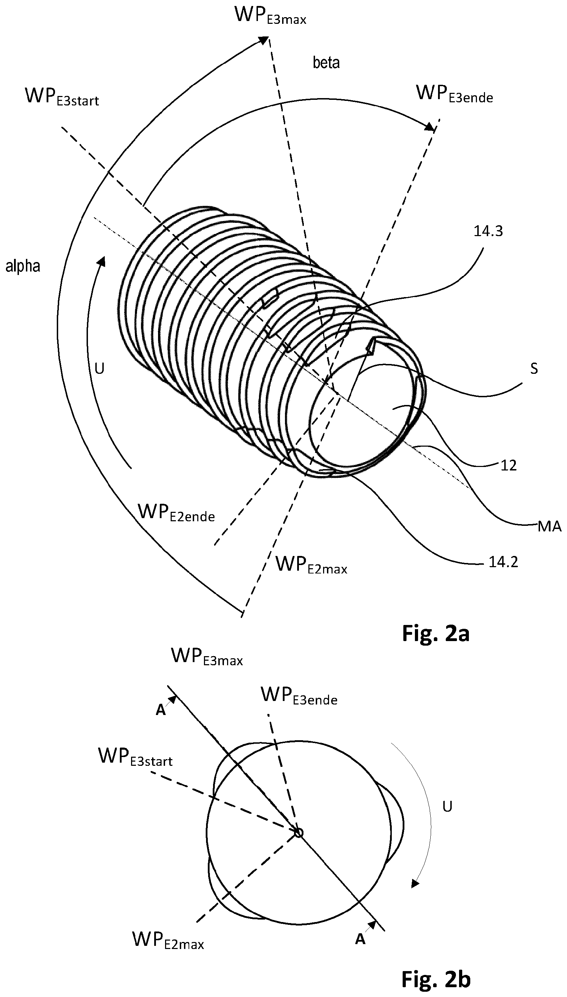

Fig. 2a zeigt eine perspektivische Ansicht auf die Schraubenspitze 12 der Schraube 10. Analog zur Ausführung gemäß Fig.1 beginnt das Gewinde 20 an der Schraubenspitze 12 und erstreckt sich in Richtung des Kopfes entlang seiner Schraubenlinie.

Beginnt man an einem Startpunkt S am Gewinde 20, beispielsweise am Beginn des Gewindes 20, schließt der Winkel des Gewinderadius an der Winkelposition $WP_{E2max}$, an der sich der Erhebungsmaximalradius der zweiten Vorformerhebung 14.2 befindet, in der Projektion auf die Normalen-Ebene zur Schraubenmittelachse MA einen Umlaufwinkel U mit dem Radius am Startpunkt ein. Der Umlaufwinkel U erhöht sich mit jeder vollen Umdrehung um 360°, wobei sich die Lage des Gewindeaußenradius an der jeweiligen Winkelposition mit zunehmendem Umlaufwinkel U entlang der Schraubenmittelachse in Richtung des Kopfes verschiebt. Die Draufsicht auf die Normalen-Ebene ist in Fig.

2b dargestellt.

Der Umlaufwinkelabstand alpha$_{Max}$ zwischen den Maxima zweier benachbarter Erhebungen, beispielsweise zwischen den Winkelpositionen WP$_{E2max}$ und WP$_{E3max}$ beträgt im vorliegenden Fall 120°, so dass sich kein Versatz in Umfangsrichtung von den in Axialrichtung übereinanderliegenden Erhebungen zueinander ergibt. Alternativ kann der Umlaufwinkelabstand alpha$_{Max}$ zwischen den Maxima zweier benachbarter Erhebungen 14.X,16.X auch beispielsweise 125° betragen, so dass sich ein Versatz der Erhebungen in Umlaufrichtung ergibt.

Ferner erstreckt sich jede Erhebung über einen Umlaufwinkelabstand beta. Jede Erhebung 14.X, 16.X besitzt damit eine Winkelposition WP, an der die Erhebung 14.X, 16.X beginnt und eine weitere Winkelposition WP, an der die Erhebung endet. So beginnt beispielsweise die dritte Erhebung 14.3 an der Winkelposition WP$_{E3start}$ und erstreckt sich bis zum Ende der dritten Erhebung 14.3 an der Winkelposition WP$_{E3ende}$.

Bevorzugt ist der Umlaufwinkelabstand zweier benachbarter Erhebungen alpha mehr als doppelt so groß wie der Umlaufwinkelabstand beta der Erhebung.

Fig. 3a zeigt schematisch ein Beispiel des Verlaufs einer Gewindelinie GL am äußersten Punkt der Gewindespitze über die Schraubenlinie entlang ihrer Abwicklung über den Umlaufwinkel. Über den Spitzenbereich SB ist die prinzipielle Zunahme des Gewindeaußenradius R$_A$ in Richtung des Tragbereichs TB zu erkennen. Die prinzipielle Zunahme des Basisgewindeaußenradius ist als Basisgewindelinie BL als kurz gestrichelte Linie dargestellt. Diese zeigt den Verlauf eines "Basisgewindes" so, wie das Gewinde 20 ohne die bereichsweisen Erhebungen 14.X, 16.X verlaufen würde.

Die durchgezogene Linie zeigt den Verlauf der tatsächlichen Gewindelinie GL entlang des Basisgewindes und über die Erhebungen, die in ihrem Gewindeaußenradius über die Basisgewindelinie hinausgehen. Die Erhebungen besitzen bei ihrem Erhebungsmaximalradius R$_{AEmax}$ ihr lokales Maximum. Im vorliegenden Beispiel verläuft die Zunahme von R$_{AEmax}$ über den Spitzenbereich parallel zur Basisgewindelinie.

In dieser Darstellung ist zu erkennen, dass die Erhebungen in Umfangsrichtung kurz gestaltet sind und sich nur über einen kurzen Winkelbereich von bis zu etwa pi / 3 (60°) erstrecken. Der Umlaufwinkelabstand zwischen zwei Erhebungen, beispielsweise zwischen WP$_{E2ende}$ und WP$_{E3start}$, beträgt in etwa pi /3 (60°).

Das Gewinde weist drei Kalibriererhebungen 16.X im Spitzenbereich SB der Schraube 10 auf, nämlich in dem Bereich, in dem insbesondere der Gewindeaußenradius R$_A$ des Basisgewindes kontinuierlich, im vorliegenden Fall linear, zunimmt.

Die drei Kalibriererhebungen 16.X besitzen den gleichen Erhebungsmaximalradius R$_{E9Max}$, R$_{E10\,max}$, R$_{E11Max}$, der dem Kalibrierradius R$_K$ entspricht. Der Kalibrierradius R$_K$, und damit der Erhebungsmaximalradius R$_{E9Max}$, R$_{E10Max}$, R$_{E11Max}$, der Kalibriererhebungen 16.X ist größer als der Traggewinderadius R$_T$ des Gewindes im Tragbereich TB der Schraube.

Da sich die Kalibriererhebungen 16.X im Bereich der Radiuszunahme im Spitzenbereich SB befinden, ergibt sich im Vergleich zum Tragbereich TB eine größere Differenz zwischen dem Basisgewinderadius R$_{AB}$ und der Kalibrierradius R$_K$. Dies ermöglicht, dass die Kalibriererhebungen 16.X auch in einem Walzverfahren zuverlässig ausreichend präzise hergestellt werden können. Dies führt dann zu einer zuverlässigeren Reduzierung des Furchmoments einer solchen Schraube bei der Direktverschraubung in Leichtmetall.

Die umfängliche Ausdehnung der Erhebung entspricht in etwa, oder ist bevorzugt kleiner als ein Umlaufwinkelabstand von 60°. Dadurch wird nur über einen geringen Schraubwinkel Reibung verursacht, wodurch das Einschraubmoment klein gehalten werden kann.

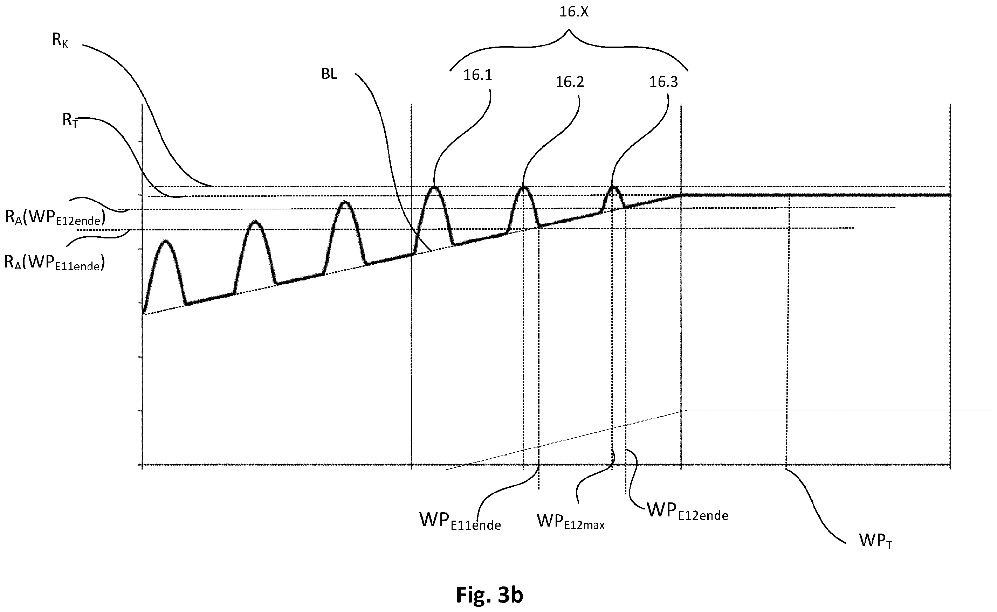

Fig. 3b zeigt eine ausschnittsweise Vergrößerung der Darstellung aus Fig. 3a, mit Fokus auf die Kalibriererhebungen 16.X. In dieser vergrößerten Darstellung wird deutlich, dass der Unterschied im Außenradius zum Basisgewinde BL selbst bei der dem Tragbereich TB nächstliegenden Erhebung noch deutlich größer ist als dies im Tragbereich TB der Fall wäre, wo der Unterschied lediglich R$_K$-R$_T$ betragen würde und der erfindungsgemäß bevorzugt kleiner als 0,1 mm ist.

Auf diese Weise können nach der erfindungsgemäßen Lehre die Kalibriererhebungen 16.X. auch im Walzverfahren präzise hergestellt werden, um eine möglichst definierte Ausformung des Muttergewindes zu erreichen.

Zwischen der dem Tragbereich nächstgelegenen Kalibriererhebung 16.3 und dem Tragbereich weist der Gewindeaußenradius R$_A$ an der Umlaufwinkelposition WP$_{E12ende}$ ein lokales Minimum mit dem Gewindeaußenradius R$_A$(WP$_{E12ende}$) auf.

Das Verhältnis des Gewindeaußenradius R$_A$(WP$_{E12ende}$) an diesem lokalen Minimum zum Tragbereichsradius R$_T$ ist bevorzugt kleiner als 0,996.

Ferner ergibt sich am Ende der zweiten Kalibriererhebung 16.2, also an der Umlaufwinkelposition WP$_{E11ende}$ ein weiteres lokales Minimum mit dem Gewindeaußenradius R$_A$(WP$_{E11ende}$).

Das Gewinde ist insbesondere derart gestaltet, dass das Verhältnis des prozentualen Überstands des Kalibrierradius R$_K$ über einen Minimums-Mittelwert zum prozentualen Überstand des Kalibrierradius R$_K$ über den Tragbereichsradius R$_T$ größer als 1,4 ist.

Der Minimums-Mittelwert ist der Mittelwert des Gewindeaußenradius R$_A$(WP$_{E12ende}$) am ersten lokalen Minimum und des Gewindeaußenradius am zweiten lokalen Minimum R$_A$(WP$_{E11ende}$)

Die Gestaltung des Gewindes genügt also der Formel:

$$(R_K / ((R_A(WP_{E12ende}) + R_A(WP_{E11ende}))/2)) - 1) / ((R_K / R_T)-1) > 1,4$$

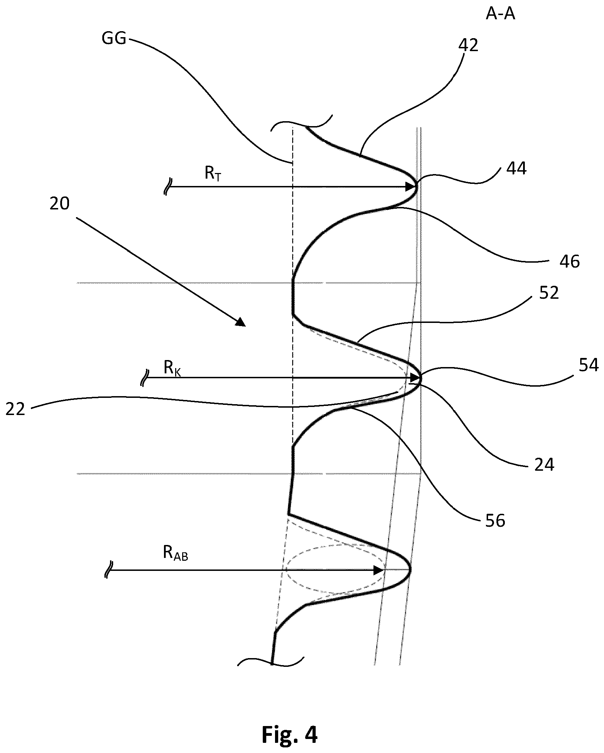

Die Ausdehnung der Erhebung in Axialrichtung ist in Fig. 4 dargestellt.

Fig. 4 zeigt eine schematische Schnittansicht A-A durch ein Gewinde 20 im Übergang von Tragbereich TB in den Spitzenbereich SB. Das Gewinde 20 weist ausgehend von seiner Gewindegrundlinie GG eine dem Kopf zugewandte Gewindeflanke im Bereich der Kalibriererhebung eine Lastflanke 52, auf, die in eine Gewindespitze 54 mit einer elliptischen Kontur übergeht. Im Anschluss in Richtung der Schraubenspitze geht die Gewindespitze 54 wieder in eine Gewindeflanke über, nämlich eine Führungsflanke 56. Die Kontur des Basisgewindes, wie es in der Schnittebene vorläge, wenn dort keine Erhebung wäre, ist mit einer Strichlinie dargestellt. Im Tragbereich TB entspricht dann der tatsächliche Verlauf dem des Basisgewindes, wobei dieses eine Lastflanke 42, eine Gewindespitze 44 und eine Führungsflanke 46 aufweist.

In Umfangsrichtung begrenzt überragt eine Kalibriererhebung 54 den Verlauf des Basisgewindes. Die Kalibriererhebung besitzt in ihrem lokalen Maximum den Erhebungsmaximalradius $R_{AEmax}$, der im vorliegenden Fall dem Kalibrierradius $R_K$ entspricht. In Fig. 4 ist ersichtlich, dass abweichend von dem in Form einer Strichlinie dargestellten Basisgewindeverlauf, die Erhebung sich auch in Axialrichtung über das Basisgewinde hinaus erstreckt, wobei bevorzugt die Erhebung im Zuge eines Walzvorgangs mit gewalzt wird.

Wie auch Fig. 3b zu entnehmen ist, ergibt sich an der Winkelposition $WP_{E12max}$, also in dem Bereich, in dem die Basisgewindehöhe noch zunimmt, eine deutlich größere Differenz zwischen dem Basisgewinde und der Kalibrierhöhe $R_K$, als dies im Tragbereich TB gegenüber dem Tragbereichsradius $R_T$ der Fall wäre. So kann die Erhebung 54 zuverlässiger hergestellt werden.

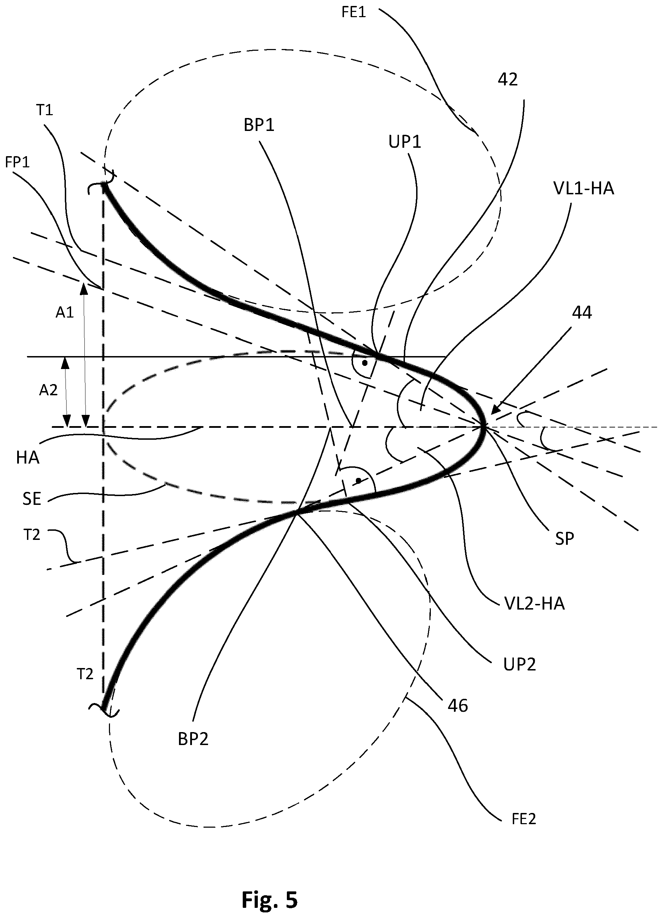

Das Basisgewinde weist im Tragbereich eine elliptisch geformte Gewindespitze 44 auf. Die Gestaltung der Gewindespitze ist in Fig. 5 näher beschrieben.

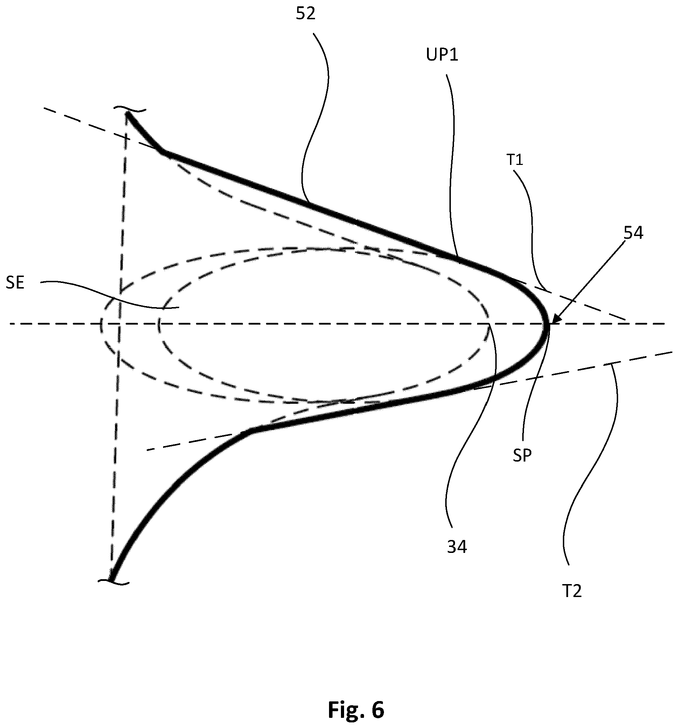

Die Gewindespitze 54 weist einen im Querschnitt elliptischen Verlauf auf, dessen Gestaltung und Wirkung im Rahmen von Fig. 6 näher beschrieben wird.

Durch die verbesserte Beständigkeit der elliptischen Gewindespitze gegen Abnutzung in Kombination mit der erfindungsgemäßen Gestaltung des Kalibrierbereichs im Spitzenbereich wird eine besonders zuverlässige präzise Ausformung des Muttergewindes ermöglicht.

Die elliptische Kontur der Gewindespitze im Tragbereich eignet sich besonders zur Anpassung an die Querschnittsform der Erhebung, wodurch die Anlagefläche im angezogenen Zustand vergrößert wird, wodurch wiederum die Auszugskräfte erhöht werden können. Die Form der Gewindespitze der Erhebung ist ähnlich zu der des Basisgewindes, wie sie nachfolgend im Hinblick auf Fig. 6 im Einzelnen beschrieben ist.

Fig. 5 zeigt einen Querschnitt des Gewindegangs im Tragebereich TB mit der im Querschnitt elliptisch geformten Gewindespitze 44. Diese Gewindeform liegt im Wesentlichen auch im Basisgewinde über den Spitzenbereich SB der Schraube vor also in dem Bereich jeweils zwischen den Erhebungen.

Die Kontur der Gewindespitze 44 im Querschnitt folgt einer Ellipse SE. Die Gewindespitze 44 geht in Richtung der Schraubenspitze in eine Führungsflanke 46 und in Richtung des Schraubenkopfes in eine Lastflanke 42 über. Der Scheitelpunkt SP der Gewindespitze liegt am Scheitelpunkt der Ellipse SE in ihrem Schnittpunkt mit ihrer großen Halbachse HA.

Die Gewindespitze 44 geht an einem Übergangspunkt UP1 in die Lastflanke 42 und einem Übergangspunkt UP2 in die Führungsflanke 46 über. Die Übergangspunkte UP1 und UP2 sind die Punkte, an denen die Gewindekontur die, die Gewindespitze 44 definierende Ellipsenbahn SE, verlässt.

An den Übergangspunkten UP1 und UP2 kann jeweils eine Tangente T1, T2 angelegt werden, die den Flankenwinkel definiert.

Am Übergangspunkt UP1 liegt die Tangente T1 an, die den Lastflankenwinkel LF mit der großen Halbachse HA einschließt.

Eine Orthogonale auf die Tangente T1 im Übergangspunkt UP1 schneidet die große Halbachse in einem Schnittpunkt BP1. Die Gewindespitze ist bevorzugt derart gestaltet, dass die Distanz zwischen dem Schnittpunkt BP1 und dem Übergangspunkt UP1 weniger als 90% des Abstands zwischen dem Scheitelpunkt SP und dem Schnittpunkt BP1 beträgt. Dadurch wird eine ausreichende Krümmung der Gewindespitze für einen guten Materialfluss während der Verdrängung erreicht, so dass die Abnutzung der Gewindespitze während des Furchvorgangs reduziert wird.

Ferner ist die Gewindespitze bevorzugt so geformt, dass die Verbindungslinie VL1 des Übergangspunktes UP1 mit dem Scheitelpunkt SP einen Scheitelpunktswinkel VL1 - HA mit der großen Halbachse HA einschließt. Dieser Scheitelpunktswinkel VL1-HA ist insbesondere kleiner als 45°, im vorliegenden Ausführungsbeispiel liegt dieser bei etwa 22°.

Die Gewindespitze 44 ist so gestaltet, dass die am UP1 geltenden Zusammenhänge auch am UP2 der Führungsflanke gelten.

Am Übergangspunkt UP2 liegt die Tangente T2 an, die einen Führungsflankenwinkel FF mit der großen Halbachse HA einschließt.

Eine Orthogonale auf die Tangente T2 im Übergangspunkt UP2 schneidet die große Halbachse in einem Schnittpunkt BP2. Die Gewindespitze ist bevorzugt derart gestaltet, dass die Distanz zwischen dem Schnittpunkt BP2 und dem Übergangspunkt UP2 weniger als 90% des Abstands zwischen dem Scheitelpunkt SP und dem Schnittpunkt BP2 beträgt. Dadurch wird eine ausreichende Krümmung der Gewindespitze für einen guten Materialfluss während der Verdrängung erreicht, so dass die Abnutzung der Gewindespitze während des Furchvorgangs reduziert wird.

Ferner ist die Gewindespitze bevorzugt so geformt, dass die Verbindungslinie VL2 des Übergangspunktes UP2 mit dem Scheitelpunkt SP einen Scheitelpunktswinkel VL2 - HA mit der großen Halbachse HA einschließt. Dieser Scheitelpunktswinkel VL2-HA ist insbesondere kleiner als 45°, im vorliegenden Ausführungsbeispiel liegt dieser bei etwa 22°.

Ferner kann ein Grundflankenwinkel bestimmt werden, der sich aus der Summe des Lastflankenwinkels LF und des Führungsflankenwinkels FF ergibt. Dieser ist im vorliegenden Ausführungsbeispiel 35°.

Das Gewinde ist bevorzugt so gestaltet, dass eine Parallele zur Tangente T1 durch den Scheitelpunkt die Gewindegrundlinie in einem Fußpunkt FP1 schneidet. Der Abstand A1 des Fußpunkts FP1 zur großen Halbachse ist erfindungsgemäß höchstens dreimal so groß wie der Abstand A2 des Übergangspunkts UP1 zur großen Halbachse.

In der beschriebenen Ausführungsform ist das Gewinde so gestaltet, dass der Abstand A1 etwa doppelt so groß ist wie der Abstand A2 des Übergangspunkts zur großen Halbachse HA. Dadurch kann eine schlanke Gewindeform erreicht werden.

In der vorliegenden Ausführungsform wird der Flankenverlauf sowohl der Führungsflanke 46 als auch der Lastflanke 42, wenigstens teilweise durch Ellipsenkonturen bestimmt. Diese Flanken-Ellipsen FE1, FE2 weisen eine deutlich geringere Exzentrizität auf als die Gewindespitze bestimmende Ellipse SE.

Fig. 6 zeigt einen Gewindequerschnitt einer weiteren Gewindeform im Spitzenbereich SB der Schraube 10, wobei die Gewindespitze 54 des Furchbereichs im Bereich einer Erhebung dargestellt ist. Eine elliptische Gewindespitze 54 führt zu verbesserten Furcheigenschaften und reduziert damit die Abnutzung der so gestalteten Kalibriererhebungen. Ferner ist der Erhebungskontur der Gewindequerschnitt des Basisgewindes mit seiner Gewindespitze 34 gegenübergestellt, wie es an der Schnittlinie durch das Gewinde mit der Erhebung bei gleichmäßig zunehmendem Verlauf des Basisgewindes an dieser Stelle vorliegen würde.

Der Scheitelpunkt SP liegt hier den Erhebungsmaximalradius an der jeweiligen Erhebung $R_{E8max}$ entfernt von der Schraubenmittelachse.

Der Verlauf entlang der Spitzenellipse ist ähnlich dem Verlauf der Spitzenellipse gemäß Fig. 5.

Da das Gewinde im Tragbereich dieselbe Kontur wie das Basisgewinde aufweist, liegt die Tangente T1 an die Lastflanke an die die Gewindespitze definierende Ellipse im Übergangspunkt UP1 zur Lastflanke im Bereich der Erhebung parallel zur Tangente T1 an die Ellipse im Übergang zur Lastflanke im Tragbereich TB. Beide schließen damit denselben Lastflankenwinkel mit der großen Halbachse HA ein. Dasselbe gilt für die Tangente T2 in analoger Weise in Bezug auf die Führungsflanke.

Insoweit entspricht die Querschnittskontur der Erhebung im Wesentlichen der Kontur im Tragbereich. Lediglich der Bereich, in dem die Gewindeflanke den Tangenten T1, T2 folgt, ist bei der Erhebung länger. Dadurch wird ein gegenüber dem Tragbereich vergrößerter Gewindegang vorgefurcht, in den das Gewinde im Tragbereich mit parallel zum vorgefurchten Muttergewinde liegenden Flankenbereichen eingreifen kann.

So ist auch die dem Tragbereich nächstliegende Kalibriererhebung gestaltet, wobei der Unterschied zwischen dem Basisgewinde und der Erhebung jedoch größer als der Unterschied zwischen dem Gewinde im Tragbereich und der Erhebung ist. Dadurch ist eine zuverlässige Fertigung der Erhebungen gewährleistet, und es wird dennoch ein nur geringfügig größer vorgeformtes Muttergewinde erzeugt.

## Patentansprüche

1. Schraube (10) zur Direktverschraubung in ein Bauteil insbesondere aus einem Leichtmetallwerkstoff, umfassend einen Kopf und einen Schaft, wobei der Schaft mit einem Gewinde (20) versehen ist, dessen Gewindeaußenradius ($R_A$) sich ausgehend von einem zylindrischen Tragbereich (TB) mit einem konstanten Tragbereichsradius ($R_T$), über einen Spitzenbereich (SB) zur Schraubenspitze (12) hin verringert, wobei das Gewinde (20) im Spitzenbereich (SB), der Bereich, in dem sich der Gewindeaußenradius ($R_A$) zur Schraubenspitze (12) hin verringert, wenigstens fünf in Umfangsrichtung abgegrenzte, sich in Radialrichtung erstreckende Erhebungen (14.X,16.X) aufweist, wobei sich im Bereich der Erhebungen (14.X, 16.X) der Gewindeaußenradius ($R_A$) derart ändert, dass sich, ein einer Erhebung zugeordneter Erhebungsmaximalradius ($R_{E1max}$; $R_{E2max}$, $R_{E8max}$) ergibt, **dadurch gekennzeichnet, dass** der jeweilige Erhebungsmaximalradius ($R_{E10max}$, $R_{E11max}$, $R_{E12max}$) von wenigstens zwei Erhebungen - Kalibriererhebungen (16.X) - gleich groß ist und einem Kalibrierradius ($R_K$) entspricht, der größer als der Tragbereichsradius ($R_T$) ist, wobei zwischen den Kalibriererhebungen (16.X) und der vordersten Schraubenspitze (12) wenigstens drei Vorformerhebungen (14.X) angeordnet sind, die in ihrem jeweiligen Erhebungsmaximalradius ($R_{E1max}$; $R_{E2max}$, $R_{E8max}$) kleiner sind als der Erhebungsmaximalradius ($R_{E10max}$, $R_{E11max}$, $R_{E12max}$) der Kalibriererhebungen (16.X) und zudem der Erhebungsmaximalradius ($R_{E1max}$; $R_{E2max}$, $R_{E8max}$) der Vorformerhebungen (14.X) in Richtung der Schraubenspitze (12) abnimmt.

2. Schraube nach Anspruch 1, **dadurch gekennzeichnet, dass** zwischen dem Tragbereichsradius ($R_T$) und der ersten Erhebung in Richtung der Schraubenspitze (12) ein lokales Minimum im Gewindeaußenradius ($R_A$) liegt, das geringer als der Tragbereichsradius ($R_T$) ist.

3. Schraube nach Anspruch 2, **dadurch gekennzeichnet, dass** das Verhältnis von Gewindeaußenradius ($R_A$ ($WP_{E12ende}$)) am ersten lokalen Minimum zu Tragbereichsradius ($R_T$) kleiner als 0,996 ist.

4. Schraube nach Anspruch 2 oder 3, **dadurch gekennzeichnet, dass** das Gewinde derart gestaltet ist, dass ein Verhältnis des prozentualen Überstands des Kalibrierradius ($R_K$) zu einem Minimums-Mittelwert ((($R_A$($WP_{E12ende}$) + $R_A$($WP_{E11ende}$) )/2 ) zum prozentualen Überstand des Kalibrierradius ($R_K$) zum Tragbereichsradius ($R_T$) größer als 1,4 ist, wobei der Minimums-Mittelwert durch den Mittelwert des Gewindeaußenradius ($R_A$($WP_{E12ende}$)) am ersten lokalen Minimum zwischen Tragbereich und der ersten Kalibriererhebung (16.3) und des Gewindeaußenradius ($R_A$ ($WP_{E11ende}$)) am zweiten lokalen Minimum zwischen der ersten Kalibriererhebung (16.3) und der zweiten Erhebung (16.2) gebildet wird.

5. Schraube nach einem der vorangehenden Ansprüche, **dadurch gekennzeichnet, dass** ausgehend von der Spitze (12) über den Spitzenbereich die Zunahme des jeweiligen Erhebungsmaximalradius ($R_{AEmax}$) der Vorformerhebungen (14.X) in der gleichen Weise wie die Zunahme des Gewindeaußenradius ($R_A$) an den lokalen Minima zwischen den Vorformerhebungen (14.X) erfolgt.

6. Schraube nach Anspruch nach einem der vorangehenden Ansprüche, **dadurch gekennzeichnet, dass** in einer Erhebung (14.X, 16.X) an einer ersten Umlaufwinkelposition ($WP_{EXstart}$) eines Umlaufwinkels (U) der Gewindeaußenradius ($R_A$) auf dem Niveau des Basisgewindeaußenradius ($R_{AB}$) liegt, bei weiterer Zunahme dem Erhebungsmaximalradius ($R_{AEmax}$) entspricht und bei weiterer Zunahme wieder dem Basisgewindeaußenradius ($R_{AB}$) an der entsprechenden Umlaufwinkelposition ($WP_{EXende}$) Umlaufwinkels (U) am Ende der Erhebung entspricht.

7. Schraube nach Anspruch 6, **dadurch gekennzeichnet, dass** in einer Erhebung (14.X, 16.X) über einen Umlaufwinkelabstand (beta) der Gewindeaußenradius ($R_A$) ausgehend vom Basisgewindeaußenradius ($R_{AB}$) kontinuierlich zunimmt und dann wieder abnimmt, bis er wieder dem Basisgewindeaußenradius ($R_{AB}$) entspricht, insbesondere einem parabolischen Verlauf folgt.

8. Schraube nach Anspruch 7, **dadurch gekennzeichnet, dass** das Gewinde (20) zwischen zwei benachbarten Vorformerhebungen (14.X) ausgehend von der Schraubenspitze der Basisgewindeaußenradius ($R_{AB}$) linear ansteigt.

9. Schraube nach einem der vorangehenden Ansprüche, **dadurch gekennzeichnet, dass** der Tragbereichsradius ($R_T$), mehr als 90% des Kalibrierradius ($R_K$) beträgt.

10. Schraube nach einem der vorangehenden Ansprüche, **dadurch gekennzeichnet, dass** der Kalibrierradius ($R_K$) höchstens um 0,1 mm größer ist als der Tragbereichsradius ($R_T$).

11. Schraube nach einem der vorangehenden Ansprüche, **dadurch gekennzeichnet, dass** der Erhebungsmaximalradius ($R_{AEmax}$) einer Vorformerhebung größer ist als der nächstgelegene Gewindeaußenradius ($R_A$) am Beginn der nächstgelegenen Erhebung in Richtung des Kopfes (18).

12. Schraube nach einem der vorangehenden Ansprüche, **dadurch gekennzeichnet, dass** der Umlaufwinkel (U) in der Normalenebene zur Schraubenmittelachse zwischen zwei benachbarten Erhebungsmaxima einem Umlaufwinkelabstand ($alpha_{max}$), mit 360° / n -10° < $alpha_{max}$ < 360° /n +10° entspricht, wobei n zwischen 2, 3 oder 4, und der Winkelabstand (beta) einer Erhebung kleiner als 210°/ n ist.

13. Schraube nach einem der vorangehenden Ansprüche, **dadurch gekennzeichnet, dass** die Erhebungen (14.X, 16.X) sich auch in axialer Richtung, insbesondere beidseitig, über das Basisgewinde hinaus erstrecken.

**14.** Schraube nach einem der vorangehenden Ansprüche, **dadurch gekennzeichnet, dass** die Steigung der Gewindelinie etwa 5° bis 7° beträgt, was der Zunahme des Basisgewindeaußenradius pro Windung um 3% bis 5% entspricht.

**15.** Schraube nach einem der vorangehenden Ansprüche , **dadurch gekennzeichnet, dass** der Kerndurchmesser ($D_K$) von der Spitze (12) ausgehend über den Spitzenbereich (SB) zunimmt und ausgehend von der Schraubenspitze (12) in Richtung des Kopfes, die relative Zunahme des Kerndurchmessers ($D_K$) geringer als die Zunahme des Basisgewinderadius ($R_{AB}$ ) ist.

## Claims

**1.** Screw (10) for direct screwing into a component, in particular made of a light metal material, comprising a head and a shank, which shank has a thread (20), the outer thread radius ($R_A$) of which decreases from a cylindrical load-bearing region (TB) of a constant load-bearing region radius ($R_T$) through a tip region (SB) toward the screw tip (12), which thread (20) has at least five elevations (14.X, 16.X) in the tip region, i.e. the region in which the thread outer radius ($R_A$) decreases toward the screw tip (12), which elevations (14.X, 16.X) are delimited in the circumferential direction and extend in the radial direction, with the thread outer radius ($R_A$) changing in the region of the elevations (14.X, 16.X) in such a way that a maximum elevation radius ($R_{E1max}$, $R_{E2max}$, $R_{E8max}$) associated with an elevation is obtained, **characterized in that** the respective maximum elevation radius ($R_{E10max}$, $R_{E11max}$, $R_{E12max}$) of at least two elevations - calibration elevations (16.X) - is the same and corresponds to a calibration radius ($R_K$) which is greater than the load-bearing region radius ($R_T$), with at least three preforming elevations (14.X) being arranged between the calibration elevations (16.X) and the foremost screw tip (12), which preforming elevations (14.X) have a smaller respective maximum elevation radius ($R_{E1max}$, $R_{E2max}$, $R_{E8max}$) than the maximum elevation radius ($R_{E10max}$, $R_{E11max}$, $R_{E12max}$) of the calibration elevations (16.X), and moreover the maximum elevation radius ($R_{E1max}$, $R_{E2max}$, $R_{E8max}$) of the preforming elevations (14.X) decreases in the direction of the screw tip (12).

**2.** Screw according to claim 1, **characterized in that,** between the load-bearing region radius ($R_T$) and the first elevation in the direction of the screw tip (12), there is a local minimum in the thread outer radius ($R_A$), which is smaller than the load-bearing region radius ($R_T$).

**3.** Screw according to claim 2, **characterized in that,** at the first local minimum, the ratio of the thread outer radius ($R_A$($WP_{E12end}$)) to the load-bearing region radius ($R_T$) is less than 0.996.

**4.** Screw according to any one of claims 2 or 3 above, **characterized in that** the thread is designed such that a ratio of the percentage protrusion of the calibration radius ($R_K$) to a minimum mean value ((($R_A$($WP_{E12end}$) +$R_A$($WP_{E11end}$))/2) to the percentage protrusion of the calibration radius ($R_K$) to the load-bearing region radius ($R_T$) is greater than 1.4, which minimum mean value is formed by the mean value of the thread outer radius ($R_A$($WP_{E12end}$)) at the first local minimum between the load-bearing region and the first calibration elevation (16.3) and the thread outer radius ($R_A$($WP_{E11end}$)) at the second local minimum between the first calibration elevation (16.3) and the second elevation (16.2).

**5.** Screw according to any one of the preceding claims, **characterized in that,** starting from the tip (12), over the tip region, the increase in the respective maximum elevation radius ($R_{AEmax}$) of the preforming elevations (14.X) occurs in the same way as the increase in the thread outer radius ($R_A$) at the local minima between the preforming elevations (14.X).

**6.** Screw according to any one of the preceding claims, **characterized in that,** in an elevation (14.X, 16.X) at a first rotation angle position ($WP_{EXstart}$) of a rotation angle (U), the thread outer radius ($R_A$) is at the level of the base thread outer radius ($R_{AB}$), corresponds to the elevation maximum radius ($R_{AEmax}$) on further increase, and, on further increase, corresponds again to the base thread outer radius ($R_{AB}$) at the corresponding rotation angle position ($WP_{EXend}$) of the rotation angle (U) at the end of the elevation.

**7.** Screw according to claim 6, **characterized in that,** in an elevation (14.X, 16.X), the thread outer radius ($R_A$) increases continuously over a rotation angle distance (beta) starting from the base thread outer radius ($R_{AB}$) and then decreases again until it again corresponds to the base thread outer radius ($R_{AB}$), in particular follows a parabolic course.

**8.** Screw according to claim 7, **characterized in that,** in the thread (20), the base thread outer radius ($R_{AB}$) increases linearly between two adjacent preforming elevations (14.X), starting from the screw tip.

9. Screw according to any one of the preceding claims, **characterized in that** the load-bearing region radius ($R_T$) is more than 90% of the calibration radius ($R_K$).

10. Screw according to any one of the preceding claims, **characterized in that** the calibration radius ($R_K$) is at most 0.1 mm larger than the load-bearing region radius ($R_T$).

11. Screw according to any one of the preceding claims, **characterized in that** the maximum elevation radius ($R_{AEmax}$) of a preforming elevations is larger than the nearest thread outer radius ($R_A$) at the beginning of the nearest elevation in the direction of the head (18).

12. Screw according to any one of the preceding claims, **characterized in that** the rotation angle (U) in the normal plane to the screw center axis between two adjacent elevation maxima corresponds to a rotation angle distance ($alpha_{max}$), with $360°/n-10° < alpha_{max} < 360°/n+10°$, with n being between 2, 3 or 4, and the angular distance (beta) of an elevation being less than $210°/n$.

13. Screw according to any one of the preceding claims, **characterized in that** the elevations (14.X, 16.X) also extend beyond the base thread in the axial direction, in particular on both sides.

14. Screw according to any one of the preceding claims, **characterized in that** the slope of the thread line is between approx. 5° and 7°, which corresponds to an increase of the base thread outer radius per turn of between 3% and 5%.

15. Screw according to any one of the preceding claims, **characterized in that,** starting from the tip (12), the core diameter ($D_K$) increases over the tip region (SB), and that, starting from the screw tip (12) in the direction of the head, the relative increase of the core diameter ($D_K$) is less than the increase in the base thread outer radius ($R_{AB}$).

**Revendications**

1. Vis (10) destinée à être directement vissée dans un composant en particulier fabriqué dans un matériau de métal léger, comprenant une tête et une tige, dans laquelle la tige est dotée d'un filetage (20) dont le rayon extérieur de filetage ($R_A$) se réduit en partant d'une région de support (TB) cylindrique avec un rayon de région de support ($R_T$) constant, via une région de pointe (SB) vers la pointe de vis (12), dans laquelle le filetage (20) dans la région de pointe (SB), la région dans laquelle le rayon extérieur de filetage ($R_A$) se réduit vers la pointe de vis (12), présente au moins cinq élévations (14.X, 16.X) délimitées dans la direction périphérique et s'étendant dans la direction radiale, dans laquelle dans la région des élévations (14.X, 16.X) le rayon extérieur de filetage ($R_A$) se modifie de sorte qu'il en résulte un rayon maximal d'élévation ($R_{E1max}$ ; $R_{E2max}$ ; $R_{E8max}$) attribué à une élévation, **caractérisée en ce que** le rayon maximal d'élévation ($R_{E10max}$ ; $R_{E11max}$ ; $R_{E12max}$) respectif d'au moins deux élévations - des élévations d'étalonnage (16.X) - est de même taille et correspond à un rayon d'étalonnage ($R_K$) qui est supérieur au rayon de région de support ($R_T$), dans laquelle entre les élévations d'étalonnage (16.X) et la pointe de vis (12) la plus en avant sont agencées au moins trois élévations de préforme (14.X) qui dans leur rayon maximal d'élévation ($R_{E1max}$ ; $R_{E2max}$ ; $R_{E8max}$) respectif sont inférieures au rayon maximal d'élévation ($R_{E10max}$ ; $R_{E11max}$ ; $R_{E12max}$) des élévations d'étalonnage (16.X) et en outre le rayon maximal d'élévation ($R_{E1max}$ ; $R_{E2max}$ ; $R_{E8max}$) des élévations de préforme (14.X) diminue dans la direction de la pointe de vis (12).

2. Vis selon la revendication 1, **caractérisée en ce qu'**entre le rayon de région de support ($R_T$) et la première élévation dans la direction de la pointe de vis (12) se situe un minimum local dans le rayon extérieur de filetage ($R_A$) qui est inférieur au rayon de région de support ($R_T$).

3. Vis selon la revendication 2, **caractérisée en ce que** le rapport du rayon extérieur de filetage ($R_A$)($WP_{E12ende}$)) au niveau du premier minimum local rapporté au rayon de région de support ($R_T$) est inférieur à 0,996.

4. Vis selon la revendication 2 ou 3, **caractérisée en ce que** le filetage est conçu de sorte qu'un rapport du dépassement en pourcentage du rayon d'étalonnage ($R_K$) par rapport à une valeur moyenne de minima ((($R_A$)($WP_{E12ende}$)+($R_A$)($WP_{E11ende}$))/2) rapporté au dépassement en pourcentage du rayon d'étalonnage ($R_K$) par rapport au rayon de région de support ($R_T$) est supérieur à 1,4, dans laquelle la valeur moyenne de minima est formée par la valeur moyenne du rayon extérieur de filetage ($R_A$)($WP_{E12ende}$)) au niveau du premier minimum local entre la région de support et la première élévation d'étalonnage (16.3) et du rayon extérieur de filetage ($R_A$)(WP$_{E11ende}$)) au niveau du second minimum local entre la première élévation d'étalonnage (16.3) et la seconde élévation d'étalonnage (16.2).

5. Vis selon l'une des revendications précédentes, **caractérisée en ce qu'**en partant de la pointe (12) via la région de pointe l'augmentation du rayon maximal d'élévation ($R_{AEmax}$) respectif des élévations de préforme (14.X) se produit de la même manière que l'augmentation du rayon extérieur de filetage ($R_A$) au niveau des minima locaux entre les élévations de préforme (14.X).

6. Vis selon l'une des revendications précédentes, **caractérisée en ce que** dans une élévation (14.X, 16.X) en une première position d'angle de rotation (WP$_{EXstart}$) d'un angle de rotation (U) le rayon extérieur de filetage ($R_A$) se situe sur le niveau du rayon extérieur de filetage de base ($R_{AB}$), lors d'une augmentation supplémentaire il correspond au rayon maximal d'élévation ($R_{AEmax}$) et lors d'une augmentation supplémentaire il correspond de nouveau au rayon extérieur de filetage de base ($R_{AB}$) en la position d'angle de rotation (WP$_{EXende}$) correspondante de l'angle de rotation (U) à l'extrémité de l'élévation.

7. Vis selon la revendication 6, **caractérisée en ce que** dans une élévation (14.X, 16.X) selon une distance d'angle de rotation (beta) le rayon extérieur de filetage ($R_A$) augmente en continu en partant du rayon extérieur de filetage de base ($R_{AB}$), puis diminue de nouveau, jusqu'à ce qu'il corresponde de nouveau au rayon extérieur de filetage de base ($R_{AB}$), en particulier jusqu'à ce qu'il suive un tracé parabolique.

8. Vis selon la revendication 7, **caractérisée en ce que**, sur le filetage (20) entre deux élévations de préforme (14.X) avoisinantes en partant de la pointe de vis le rayon extérieur de filetage de base ($R_{AB}$) croît de façon linéaire.

9. Vis selon l'une des revendications précédentes, **caractérisée en ce que** le rayon de région de support ($R_T$) représente plus de 90 % du rayon d'étalonnage ($R_K$).

10. Vis selon l'une des revendications précédentes, **caractérisée en ce que** le rayon d'étalonnage ($R_K$) est supérieur au rayon de région de support ($R_T$) de tout au plus 0,1 mm.

11. Vis selon l'une des revendications précédentes, **caractérisée en ce que** le rayon maximal d'élévation ($R_{AEmax}$) d'une élévation de préforme est supérieur au rayon extérieur de filetage ($R_A$) le plus proche au début de l'élévation la plus proche dans la direction de la tête (18).

12. Vis selon l'une des revendications précédentes, **caractérisée en ce que** l'angle de rotation (U) dans le plan perpendiculaire à l'axe central de vis entre deux maxima d'élévation avoisinants correspond à une distance d'angle de rotation (alpha$_{max}$) avec 360° / n-10° < alpha$_{max}$ < 360° / n+10°, dans laquelle n est entre 2, 3 ou 4, et la distance d'angle de rotation (beta) d'une élévation est inférieure à 210° / n.

13. Vis selon l'une des revendications précédentes, **caractérisée en ce que** les élévations (14.X, 16.X) s'étendent également dans une direction axiale, en particulier des deux côtés, au-delà du filetage de base.

14. Vis selon l'une des revendications précédentes, **caractérisée en ce que** l'accroissement de la ligne de filetage est d'environ 5° à 7°, ce qui correspond à l'augmentation de 3 % à 5 % du rayon extérieur de filetage de base par spire.

15. Vis selon l'une des revendications précédentes, **caractérisée en ce que** le diamètre de noyau ($D_K$) augmente en partant de la pointe (12) via la région de pointe (SB) et qu'en partant de la pointe de vis (12) dans la direction de la tête, l'augmentation relative du diamètre de noyau ($D_K$) est inférieure à l'augmentation du rayon extérieur de filetage de base ($R_{AB}$),

**Fig. 1**

**Fig. 2a**

**Fig. 2b**

Fig. 3a

Fig. 3b

$R_K$

$R_T$

$R_A(WP_{E12ende})$

$R_A(WP_{E11ende})$

BL

16.1

16.2

16.3

16.X

$WP_T$

$WP_{E12ende}$

$WP_{E12max}$

$WP_{E11ende}$

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1053405 B1
- WO 9514863 A1
- FR 1337952 A